# EUROPÄISCHE PATENTSCHRIFT

(11) **EP 2 012 038 B1**
(45) Veröffentlichungstag und Bekanntmachung des Hinweises auf die Patenterteilung: **05.10.2016**
(21) Anmeldenummer: 08012089.2
(22) Anmeldetag: 04.07.2008
(51) Int. Cl.: F16D 69/02

(54) **TROCKENLAUFREIBBELAG**
DRY RUN FRICTION COVERING
GARNITURE DE FRICTION FONCTIONNANT À SEC

(30) Priorität: 04.07.2007 AT 10252007
(43) Veröffentlichungstag der Anmeldung: 07.01.2009
(73) Patentinhaber: Miba Frictec GmbH, 4663 Laakirchen (AT)
(72) Erfinder: Mühlegger, Markus, 4812 Pinsdorf (AT)
(74) Vertreter: Burger, Hannes

(56) Entgegenhaltungen:
- DE-A1- 19 828 663
- GB-A- 2 135 411
- US-A- 2 938 790
- US-A- 5 972 070

## Beschreibung

Die Erfindung betrifft einen bindemittelfreien, gesinterten Trockenlaufreibbelag mit einem Reibbelagskörper, der eine metallische Matrix, zumindest einen Abrasivstoff und zumindest einen Füllstoff umfasst, wobei der zumindest eine Abrasivstoff ausgewählt ist aus einer Gruppe umfassend Mullit, Siliziumdioxid, Korund, Glas, Aluminiumoxid, sowie Mischungen daraus, und wobei der Reibbelagskörper eine Porosität aufweist, die größer als 10 % ist, ein Trockenreibbauteil mit einem Trägerteil, mit dem ein Reibbelag verbunden ist, sowie eine Reibbaugruppe mit zumindest einem Trockenreibbauteil.

In herkömmlichen, trocken laufenden Antriebssystemen von Kraftfahrzeugen werden organisch harzgebundene Reibbeläge eingesetzt.

Beispielsweise beschreibt die DE 29 24 540 A ein Produkt zur Herstellung von Bauelementen mit metallischer Zusammensetzung, das durch mindestens ein feines Stahlfaserpulver von einer losen Dichte zwischen 0,2 und 1,5 g/cm³, dessen Gehalt an Kohlenstoff zwischen 0,95 und 1,10 Gew.-% beträgt und dessen Gehalt an Chrom zwischen 1,3 und 1,6 Gew.-% liegt, gebildet ist, das so wärmebehandelt ist, dass die mikroskopische Struktur, gesehen von einer Prüfungsebene welche ein Metallteilchen schneidet, eine feine Verteilung kugeliger Eisen- und Chromcarbide von der Formel (FeCr)₃C in einer gemischten Grundmasse aus Martensit von hoher Festigkeit und verformbarem Austenit erkennen lässt. Dieses fasrige Pulver wird für einen Reibbelag für Bremsen in einem Anteil von 30 bis 85 Gew.-% verwendet und enthält dieser Reibbelag zusätzlich noch mineralische und organische Füllstoffe in ihrer Art und ihren Anteilen so eingestellt, dass den Benutzungseigenschaften des Belags Rechnung getragen ist. Insbesondere werden damit Reibbeläge von Kupplungen oder Bremsen hergestellt. Die Reibbeläge enthalten zwischen 10 und 20 % polymerisierbares Phenolbindemittel.

Diese Materialien zeichnen sich durch eine geringe Neigung zu Reibschwingungen (z.B. Kupplungsrupfen) aus, können aber vor allem aufgrund der verwendeten Matrixrohstoffe, also des Harzes, nur bei sehr geringen Temperatur- und Energiebelastungen eingesetzt werden.

Moderne Antriebsstränge sollen bei immer geringerem Gewicht höhere Leistungen übertragen können, wobei gleichzeitig der Fahrkomfort und die Treibstoff-Effizienz gesteigert werden sollen. Durch die Forderung das Fahrzeuggewicht möglichst gering zu halten wird auch die Baugröße von Kupplungen stark beschränkt. Dies wiederum wirkt sich auf die Belastungen des Reibbelages stark aus, denn geringer Bauraum für die Kupplung bedeutet kleinere Belag flächen, was in höheren Energie- und Temperaturbelastungen des Reibmaterials resultiert.

Die heute bekannten metallischen Reibbeläge hingegen sind allesamt sehr hoch energetisch und thermisch belastbar, haben hohe Reibwerte und geringen Abrieb, neigen aber auch sehr stark zu Reibschwingungen, die den ganzen Antriebsstrang erfassen können und sich somit sehr negativ auf den Fahrkomfort des Fahrzeuges auswirken.

Der Stand der Technik beschreibt weiters Reibbauteile, bei denen der Reibbelag durch Sinterwerkstoffe gebildet ist. So beschreibt zum Beispiel die DE 44 43 666 A einen Bauteil, insbesondere einen Synchronring, mit Reibflächen zur Reibsynchronisation in Kfz-Schaltgetrieben. Auch hier steht für diese Erfindung die zunehmende Miniaturisierung bei weiter steigenden Anforderungen hinsichtlich Leistungsübertragung und Schaltkomfort im Vordergrund. Der in dieser DE-A beschriebene Reibflächen-Werkstoff des Bauteils ist eine oberflächlich weitgehend porenfreie Sinterbronze mit das Reibverhalten, die Verschleißfestigkeit und den Schaltkomfort steigernden metallischen und nichtmetallischen Zusätzen in Form von bis zu 6 Gew.-% Zink, bis zu 6 Gew.-% Nickel, bis zu 3 Gew.-% Molybdän, 1 bis 6 Gew.-% SiO₂ und/oder Al₂O₃, wahlweise 0,2 bis 6 Gew.-% Graphit und/oder Molybdändisulfid, wobei den Rest die Bronze bildet bei definierter Teilchengröße im Ausgangspulver. Diese Sinterbronze ist für ölgeschmierte Teile zur Reibsynchronisation im Kfz-Schaltgetrieben vorgesehen.

Andererseits beschreibt die DE 42 39 441 A zur Herstellung von dichtereduzierten Reibmaterialien, insbesondere von Reibbelägen von Trockenkupplungen, dass ein die Komponenten der Reibmaterialien enthaltender Rohling einem Pressvorgang und gegebenenfalls einer ersten thermischen Nachbehandlung oder/und einer thermischen Endbehandlung unterzogen wird, wobei man den Rohling vor dem Pressvorgang ein oder mehrere Reagenzien zusetzt, die zu einer Verringerung der Dichte im Endprodukt führen, indem sie während des Pressvorgangs, der ersten thermischen Nachbehandlung oder/und der thermischen Endbehandlung unter Gasbildung entweichen oder /und sich unter Abspaltung gasförmiger Moleküle umwandeln oder/ und vollständig in flüchtige Anteile zerfallen, wobei der Pressvorgang und gegebenenfalls die erste thermische Nachbehandlung oder/und die thermische Endbehandlung auf solche Weise durchgeführt werden, dass ein Schrumpfen des Rohlings möglichst vermieden wird.

Aus der DE 42 17 948 C ist ein Verfahren zur Herstellung von porösen Reibflächen an Reibelementen an einer Synchronisiereinheit bekannt. Die Reibfläche wird durch einen aus Sinterkörnern bestehenden Sinterkörper gebildet. Die Reibfläche wird überschliffen und nach dem Überschleifen mit einem Strahl eines gasförmigen oder flüssigen Mediums behandelt, derart, dass seitliche Überstände, die beim Überschleifen der Reibfläche an den die Oberfläche der Reibfläche bildenden Sinterkörnern erzeugt werden, durch mechanische Einwirkung des Strahls von den Sinterkörnern abgebrochen und vom Sinterkörper wegbefördert werden. Es werden auf diese Weise die Zugänge zu den Porenräumen des Sinterreibkörpers nach dem Überschleifen wieder frei, sodass die gesamte Speicherfähigkeit des Reibkörpers wieder uneingeschränkt zur Verfügung steht. Es soll damit das Eindringen und Speichern von Schmiermitteln bei geschmierten Reibpaarungen ermöglicht werden.

Die DE 32 32 865 A beschreibt ein Verfahren und eine Vorrichtung zur Herstellung eines Reibelementes für eine Kraftwagen- oder Kraftradscheibenbremse. Es wird dazu ein pulverförmiges Reibmaterial in eine Formvertiefung gegeben und zusammengepresst. Dabei werden eine erste und eine zweite Widerstandselektrode verwendet. Das Reibmaterial wird dadurch gesintert und mit einer Druckplatte verbunden, die ein Ende der Formvertiefung verschließt. Die erste Elektrode hat eine mit der Druckplatte in Berührung bringbare Endfläche mit einer darin ausgebildeten Aussparung, die teilweise mittels eines Graphiteinsatzes gefüllt ist, der eine geringere elektrische Leitfähigkeit als der Rest der ersten Elektrode aufweist. Die zweite Elektrode kann einen ähnlichen Einsatz aufweisen und kann entweder das Reibmaterial direkt oder über eine dazwischen angeordnete Subelektrode aus Graphit berühren. Auf diese Weise erhält man einen guten elektrischen Kontakt zwischen dem Reibmaterial und der Elektrode und einen gleichströmigen Stromfluss durch das Material. Als Material für den Reibbelag werden Pulver aus Kupfer, Zinn, Blei und Graphit, Siliziumoxid, Aluminiumoxid und Molybdändisulfid und unterschiedlicher Zusammensetzung verwendet. Der Anteil an Siliziumoxid beträgt dabei 1,0 und 2,8 Gew.-% jener an Aluminiumoxid zwischen 4,9 und 9,7 Gew.-%. Es kann auch Siliziumnitrid in einem Anteil von 8,3 Gewichtsprozent verwendet werden. Es können damit unterschiedlich poröse Reibbeläge hergestellt werden, deren Enddichte im Bereich zwischen 72,6 % und 90,5 % beträgt.

Die US 5,972,070 A beschreibt einen Sinterreibbelag aus einer metallischen Matrix in der harte Partikel gleichmäßig dispergiert eingelagert sind, wobei der Anteil der harten Partikel zwischen 10 und 30 Gew.-% beträgt und die metallische Matrix durch eine Kupferlegierung gebildet ist, mit den Legierungselementen Zink und Nickel in einem Gesamtanteil zwischen 5 und 40 Gew.-%. Die harten Partikel werden durch intermetallische Eisenlegierungsverbindungen ausgewählt aus einer Gruppe umfassend FeMo, FeCr, FeTi, FeW und FeB gebildet. Zusätzlich können bis zu 5 Gew.-% Al2O3 bzw. auch andere Metalloxide wie SiO2, ZrO, oder Keramiken wie SiC oder AlN, als den Reibungskoeffizient verbessernde Partikel enthalten sein.

Aufgabe der Erfindung ist es, einen Reibbelag mit geringen Reibschwingungen für den Trockenlauf, also ohne Öl, zur Verfügung zu stellen.

Gelöst wird diese Aufgabe jeweils eigenständig durch den Eingangs genannten Trockenlaufreibbelag, bei dem der Anteil des zumindest einen Abrasivstoffes im Reibbelagskörper maximal 5 Gew.-% beträgt, und der zumindest eine Füllstoff ausgewählt ist aus einer Gruppe umfassend Glimmer, Feldspat, Kieselgur oder Mischungen daraus, durch ein Trockenreibbauteil, welches mit dem erfindungsgemäßen Reibbelag ausgestattet ist, sowie durch eine Reibbaugruppe, bei der zumindest ein Trockenreibbauteil erfingdungsgemäß ausgebildet ist.

Es konnte dabei festgestellt werden, dass trotz des geringen Anteils an Abrasivstoffen noch eine ausreichende Reibwirkung vorhanden ist, wobei dieser geringe Anteil an Abrasivstoffen die Reibungsschwingungen deutlich vermindert. Aufgrund des offenporigen Gefüges hat dieser Reibbelag aber dennoch die erforderlichen Reibwerte. Dieser Reibbelag ist somit einfach herzustellen, da geringer Pressdrücke während der Herstellung des Grünlings erforderlich sind um die gewünschte Porosität des Reibbelages zu erhalten. Zu dem kann auch die Sintertemperatur gesenkt werden, ebenfalls bedingt durch die hohe Porosität des Sinterkörpers, da eine dichte Versinterung nicht erforderlich ist. Zu dem erhält man durch die Porosität eine zusätzliche Dämpfung der Rupfschwingungen.

Der Füllstoff ist ausgewählt aus einer Gruppe umfassend Glimmer, Feldspat, Kieselgur oder Mischungen daraus. Es konnten dadurch im Zusammenspiel mit der hohen Porosität trotz geringer Anteile an Abrasivstoffen hohe Reibwerte erreicht werden.

Die Porosität des Reibbelagskörpers kann dabei ausgewählt sein aus einem Bereich mit einer unteren Grenze von 15 % und einer oberen Grenze von 40 %. Insbesondere in diesem Bereich konnte festgestellt werden, dass ein ausgewogenes Verhältnis von Reibwirkung und Haltbarkeit des Reibbelages erhalten wird.

Zur weiteren Verbesserung dieser Eigenschaften kann die Porosität des Reibbelagskörpers ausgewählt sein aus einem Bereich mit einer unteren Grenze von 20 % und einer oberen Grenze von 35 %, insbesondere ausgewählt sein aus einem Bereich mit einer unteren Grenze von 25 % und einer oberen Grenze von 30 %.

Die Porosität wird dabei durch das Verhältnis der Dichte des Reibbelagskörpers zur theoretischen Dichte des Vollwerkstoffes bestimmt.

Der Anteil der metallischen Matrix im Reibbelagskörpers kann ausgewählt sein aus einem Bereich mit einer unteren Grenze von 60 Gew.-% und einer oberen Grenze von 90 Gew.-%. Insbesondere durch diesen hohen Anteil wird eine ausreichende Wärmeabfuhr über die metallische Matrix von der Reibfläche weg erreicht, wodurch eine Überhitzung des Reibbelages trotz der hohen Porosität verringert werden kann.

Der Anteil der metallischen Matrix am Reibbelagskörper kann weiters ausgewählt sein aus einem Bereich mit einer unteren Grenze von 70 % und einer oberen Grenze von 80 %, ebenfalls um diese Eigenschaften weiter zu verbessern.

Es sei an dieser Stelle erwähnt, dass der restliche Anteil am Reibbelag abgesehen von der metallischen Matrix sowie den Abrasivstoffen durch zumindest einen Füllstoff gebildet ist.

Vorzugsweise wird für die metallische Matrix zumindest ein Metall oder eine Metalllegierung ausgewählt, das bzw. die eine Härte nach Vickers aufweist, die ausgewählt ist aus einem Bereich von einer unteren Grenze von 30 HV10 und einer oberen Grenze von 80 HV10. Durch Metalle dieser Härte ist es möglich, dass zumindest ein Teil der abrasiven Wirkung des Reibbelages durch die metallische Matrix erhalten wird, insbesondere wenn die metallische Matrix nicht durch Schleifen oder dergleichen nachbehandelt ist um die Oberfläche zu glätten.

Insbesondere wird für die metallische Matrix zumindest ein Metall oder eine Metalllegierung ausgewählt, das bzw. die eine Härte nach Vickers aufweist, die ausgewählt ist aus einem Bereich von einer unteren Grenze von 40 HV10 und einer oberen Grenze von 60 HV10.

Ein besonders geringes Reibschwingungsverhalten konnte mit Trockenlaufreibbelägen erreicht werden, deren metallische Matrix aus zumindest einem Element aus einer Gruppe umfassend Kupfer, Eisen, Zinn, Zink oder Legierungen damit und Mischungen daraus gebildet ist.

Der Anteil des zumindest einen Füllstoffes am Reibbelag kann ausgewählt sein aus einem Bereich von einer unteren Grenze von 5 Gew.-% und einer oberen Grenze von 35 Gew.-%. Es kann damit das Reibschwingungsverhalten weiter reduziert werden.

Das Verhältnis von Füllstoff(en) zu Abrasivstoff(en) kann ausgewählt sein aus einem Bereich mit einer unteren Grenze von 1: 1 und einer oberen Grenze von 5:1. Innerhalb dieser Grenzen konnte ein Maximum der Abrasivwirkung des erfindungsgemäßen Trockenlaufreibbelages bei geringem Abrasivstoffanteil beobachtet werden.

Der Reibbelagskörper weist eine erste und eine zweite dieser gegenüberliegenden Oberfläche auf wobei der Anteil des Abrasivstoffes von der ersten Oberfläche in Richtung auf die zweite Oberfläche zunehmen kann. Es ist damit eine Ausgestaltung mit höherem Anteil des Abrasivstoffes an der äußeren, mit einem weiteren Reibbauteil zusammenwirkenden Bauteil einer Reibbaugruppe möglich. Andererseits ist es damit aber auch möglich, einen besseren Zusammenhalt des Reibbelages mit einem Trägermaterial eines Trockenreibbauteiles durch Ausbildung von Verzahnungen oder Mikroverschweißungen zu erhalten. Je nach gewünschter Eigenschaft kann also der erhöhte Anteil des zumindest einen Abrasivstoffes an einer Oberfläche ausgewählt werden.

Es ist weiters möglich, dass in der metallischen Matrix zumindest ein Festschmierstoff enthalten ist, der ausgewählt ist aus einer Gruppe umfassend Graphit, insbesondere Naturgraphit bzw. synthetischer Primär- oder Sekundärgraphit, Koks sowie Mischungen daraus. Durch diese Festschmierstoffe wird erreicht, dass trotz der hohen Porosität und der geringen Anteil an Hart- bzw. Abrasivstoffen ein hoher Verschleiß vermieden werden kann und so Verschleißeigenschaften erreicht werden, welche Hochleistungsbelägen aus den Stand der Technik aufweisen.

Von Vorteil ist dabei, wenn der zumindest eine Festschmierstoff in der metallischen Matrix in einem Anteil enthalten ist, ausgewählt aus einem Bereich mit einer unteren Grenze von 2 Gew.-% und einer oberen Grenze von 30 Gew.-%, wodurch wiederum entsprechend niedrige Verschleißwerte erreicht werden können. Insbesondere kann der Anteil des zumindest einen Festschmierstoffes am Reibbelag ausgewählt sein aus einem Bereich mit einer unteren Grenze von 3 Gew.-% und einer oberen Grenze von 15 Gew.-%, bzw. ausgewählt sein aus einem Bereich mit einer unteren Grenze von 4 Gew.-% und einer oberen Grenze von 7,5 Gew.-%.

Besonders bevorzugt ist, wenn das Verhältnis von Abrasivstoff zu Festschmierstoff ausgewählt ist aus einem Bereich mit einer unteren Grenze von 1 : 7 und einer oberen Grenze von 1 : 20. Durch dieses abgestimmte Verhältnis an Abrasivstoff zu Festschmierstoff konnten die Verschleißeigenschaften deutlich verbessert werden.

Vorzugsweise beträgt das Verhältnis von Abrasivstoff zu Festschmierstoff 1 : 10.

Die Erfindung betrifft weiters die Verwendung des Trockenlaufreibbelages in einer trocken laufenden Kupplung oder in einer trocken laufenden Bremse oder einem trocken laufenden Synchronisationsgetriebe.

Zum besseren Verständnis der Erfindung wird diese anhand der nachfolgenden Figuren und Beispiele näher erläutert.

Es zeigen in schematischer Darstellung:
- Fig. 1: den Verlauf des Reibmomentes bei einem Sinterreibbelag nach dem Stand der Technik;
- Fig. 2: den Verlauf des Reibmomentes bei einem erfindungsgemäßen Trockenlaufreibbelag.

Zur Herstellung eines erfindungsgemäßen Trockenlaufreibbelages wurde ein Sinterpulver folgender Zusammensetzung verwendet. Sämtliche Angaben sind dabei in Gew.-% zu verstehen.

### Beispiel 1 :

60,0 % Kupfer, 10,0 % Eisen, 15,0 % Feldspat, 10,5 % synthetischer Graphit, 4,5 % Aluminiumoxid

Dieses Pulver wurde mit dem Stand der Technik entsprechenden Verfahren in der Pulvermetalagie verarbeitet. Insbesondere wurde das Pulver nach dessen Vermischung zu einem Grünling unidirektional verpresst. Der Pressdruck betrug dabei zwischen 200 MPa und 800 MPa. Der Pressdruck sollte 1100 MPa nicht überschreiten.

Anstelle des unidirektionalen Verpressens ist auch ein bidirektionales Verpressen oder ein isostatisches Verpressen möglich.

Der so hergestellte Grünling wurde bei einer Temperatur im Bereich von 800 °C bis maximal 1000 °C für eine Zeit im Bereich von 45 Minuten bis 60 Minuten gesintert und danach auf Raumtemperatur abgekühlt. Die Abkühlung erfolgt ebenfalls wie das Sintern vorzugsweise unter Schutzgasatmosphäre bzw. reduzierender Atmosphäre.

Es sei an dieser Stelle auch erwähnt, dass der Grünling und der daraus hergestellte Sinterkörper jede beliebige Form aufweisen kann, dass sich diese letztendlich nach dem jeweiligen Reibbauteil bzw. der jeweiligen Anwendung des Reibbelages und dementsprechend nach der entsprechenden Pressform richtet.

Das so hergestellte Reibmaterial wurde auf einem Trägerkörper aus Stahl angeordnet und mit diesem verlötet.

Es sind auch hier wiederum andere Verbindungsmethoden, wie sie dem Stand der Technik entsprechen, möglich.

Danach wurde dieses Teil thermisch planiert bei einer Temperatur im Bereich von 500 °C bis 720 °C, um mögliche Wärmespannung, welche aufgrund des Lötprozesses entstanden sind und die oftmals zu einem Verzug des Trägermaterials führen, auszugleichen. In einem letzten Arbeitsschritt wird der Reibbelag schließlich auf Fertigmaß gepresst. Dabei können optional auch so genannte Verschleißnuten eingebracht werden.

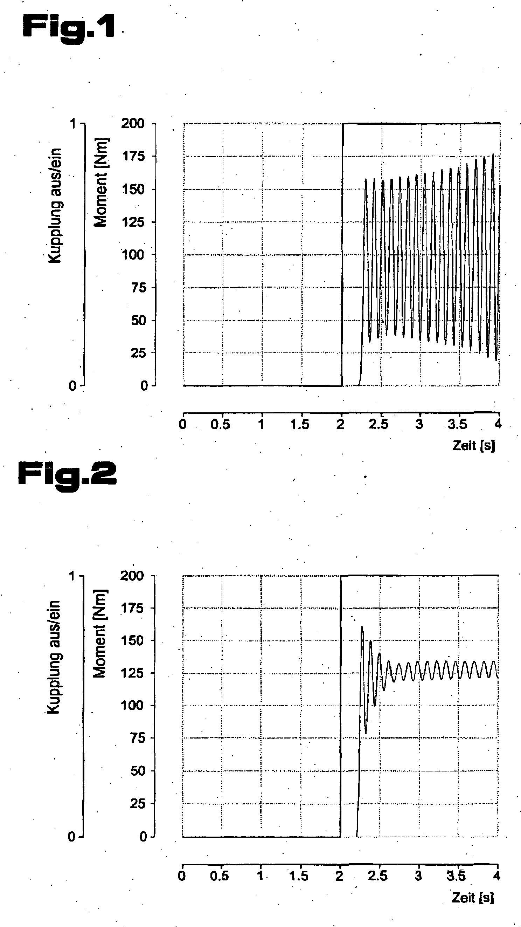

Das so hergestellte Reibbauteil mit dem erfindungsgemäßen Reibbelag wurde anschließend hinsichtlich des Verlaufes des Reibmomentes überprüft. Hierzu zeigt Fig.2 diesen Verlauf, wobei sehr deutlich zu erkennen ist, dass das Schwingungsverhalten über die Zeit abnimmt, d.h. das Material dämpft die durch das Einkuppeln erzeugte Reibschwingung. Im Vergleich dazu wurde ein Reibbelag aus dem Stand der Technik getestet und ist das Ergebnis in Fig. 1 dargestellt. Sehr deutlich ist zu erkennen, dass dieser Reibbelag nicht in der Lage ist die Schwingung zu dämpfen, die Reibschwingung bleibt konstant bzw. schaukelt sich auf.

Die Ermittlung des Reibmomentes erfolgt auf einem Reibschwingungsprüfstand nach dem Stand der Technik in der Automobilindustrie.

Es wurden mit obiger Verfahrensweise auch folgende Reibbelagszusammensetzungen hergestellt und die daraus hergestellten Reibbeläge entsprechend obigen Ausführungen getestet und konnte auch bei diesen ein deutlich geringeres Reibschwingungsverhalten beobachtet werden. Wiederum sind die Angaben zur Zusammensetzung in Gew.-% zu verstehen.

### Beispiel 2:

60,0 % Kupfer, 2,0 % Zinn, 20,0 % Kieselgur, 12,0 % synthetischer Graphit, 2,0 % Naturgrafit, 4,0 % Korund

### Beispiel 3:

60,0 % Kupfer, 14,0 % Eisen, 8,0 % Glimmer, 10,5 % synthetischer Graphit, 3,0 % Naturgrafit, 4,5 % Aluminiumoxid

### Beispiel 4 :

64,0 % Kupfer, 3,0 % Zink, 14,0 % Glimmer, 12,0 % synthetischer Graphit, 5,0 % Koks, 2,0 % Siliziumoxid

### Beispiel 5 :

69,0 % Kupfer, 8,0 % Glimmer, 10,0 % Feldspat, 10,5 % synthetischer Graphit, 2,5 % Mullit

### Beispiel 6 :

70,0 % Kupfer, 15,0 % Eisen, 5,0 % Koks, 4,0 % Naturgrafit, 4,5 % Molybdändisulfid, 1,5 % Siliziumoxid

### Beispiel 7 :

75,0 % Kupfer, 8,0 % Kieselgur, 4,0 % Molybdändisulfid, 10,5 % synthetischer Graphit, 2,5 % Mullit

### Beispiel 8:

50,0 % Kupfer, 10,0 % Eisen, 10,0 % Kieselgur, 15,0 % Glimmer, 9,0 % synthetischer Graphit, 4,5% Molybdändisulfid, 1,5 % Siliziumoxid

### Beispiel 9 :

70,0 % Kupfer, 4,0 % Zinn, 8,0 % Kieselgur, 4,0 % Molybdändisulfid, 8,0 % synthetischer Graphit, 2,0 % Naturgrafit, 4,0 % Korund

### Beispiel 10 :

40,0 % Kupfer, 25,0 % Eisen, 20,0 % Kieselgur, 11,5 % synthetischer Graphit, 3,5 % Aluminiumoxid

Die Ausführungsbeispiele beschreiben mögliche Ausführungsvarianten des Tockenlaufreibbelages.

## Patentansprüche

1. Bindemittelfreier, gesinterter Trockenlaufreibbelag mit einem Reibbelagskörper, der eine metallische Matrix, zumindest einen Abrasivstoff und zumindest einen Füllstoff umfasst, wobei der zumindest eine Abrasivstoff ausgewählt ist aus einer Gruppe umfassend Mullit, Siliziumdioxid, Korund, Glas, Aluminiumoxid, sowie Mischungen daraus, und wobei der Reibbelagskörper eine Porosität aufweist, die größer als 10 % ist, **dadurch gekennzeichnet, dass** der Anteil des zumindest einen Abrasivstoffes am Reibbelagskörper maximal 5 Gew.-% beträgt und dass der zumindest eine Füllstoff ausgewählt ist aus einer Gruppe umfassend Glimmer, Feldspat, Kieselgur oder Mischungen daraus.

2. Trockenlaufreibbelag nach Anspruch 1, **dadurch gekennzeichnet, dass** die Porosität des Reibbelagskörpers ausgewählt ist aus einem Bereich mit einer unteren Grenze von 15 % und einer oberen Grenze von 40 %.

3. Trockenlaufreibbelag nach Anspruch 1 oder 2, **dadurch gekennzeichnet, dass** der Anteil der metallischen Matrix am Reibbelagskörper ausgewählt ist aus einem Bereich mit einer unteren Grenze von 60 Gew.-% und einer oberen Grenze von 90 Gew.-%.

4. Trockenlaufreibbelag nach einem der vorhergehenden Ansprüche, **dadurch gekennzeichnet, dass** die metallische Matrix durch zumindest ein Metall oder eine Metalllegierung gebildet ist, das bzw. die eine Härte nach Vickers aufweist die ausgewählt ist aus einem Bereich mit einer unteren Grenze von 30 HV10 und einer oberen Grenze von 80 HV10.

5. Trockenlaufreibbelag nach einem der vorhergehenden Ansprüche, **dadurch gekennzeichnet, dass** die metallische Matrix aus zumindest einem Element aus einer Gruppe umfassend Kupfer, Eisen, Zinn, Zink, oder Legierungen und Mischungen daraus gebildet ist.

6. Trockenlaufreibbelag nach einem der vorhergehenden Ansprüche, **dadurch gekennzeichnet, dass** der der Anteil des zumindest einen Füllstoffes am Reibbelag ausgewählt ist aus einem Bereich mit einer unteren Grenze von 5 Gew.-% und einer oberen Grenze von 35 Gew.-%.

7. Trockenlaufreibbelag nach einem der vorhergehenden Ansprüche, **dadurch gekennzeichnet, dass** ein Verhältnis von Füllstoff zu Abrasivstoff ausgewählt ist aus einem Bereich mit einer unteren Grenze von 1:1 und einer oberen Grenze von 5: 1.

8. Trockenlaufreibbelag nach einem der vorhergehenden Ansprüche, **dadurch gekennzeichnet, dass** der Reibbelagskörper eine erste und eine zweite dieser gegenüberliegende Oberfläche aufweist und der Anteil des Abrasivstoffes von der ersten Oberfläche in Richtung auf die zweite Oberfläche zunimmt.

9. Trockenlaufreibbelag nach einem der vorhergehenden Ansprüche, **dadurch gekennzeichnet, dass** in der metallischen Matrix zumindest ein Festschmierstoff enthalten ist, der ausgewählt ist aus einer Gruppe umfassend Grafit, Molybdändisulfid, Koks, sowie Mischungen daraus.

10. Trockenlaufreibbelag nach Anspruch 9, **dadurch gekennzeichnet, dass** der Anteil des zumindest einen Festschmierstoffes ausgewählt ist aus einem Bereich mit einer unteren Grenze von 2 Gew.-% und einer oberen Grenze von 30 Gew.-%.

11. Trockenlaufreibbelag nach der vorhergehenden Ansprüche, **dadurch gekennzeichnet, dass** ein Verhältnis von Abrasivstoff zu Festschmierstoff ausgewählt ist aus einem Bereich mit einer unteren Grenze von 1 : 7 und einer oberen Grenze von 1 : 20.

12. Trockenreibbauteil mit einem Trägerteil mit dem ein Reibbelag verbunden ist, **dadurch gekennzeichnet, dass** der Reibbelag nach einem der vorhergehenden Ansprüche ausgebildet ist.

13. Trockenreibbauteil nach Anspruch 12, **dadurch gekennzeichnet, dass** der Reibbelag eine erste Oberfläche und eine zweite dieser gegenüberliegende Oberfläche aufweist, wobei die erste Oberfläche an dem Tragteil anliegt und der Anteil des Abrasivstoffes an Reibbelag von der ersten Oberfläche in Richtung auf die zweite Oberfläche zunimmt.

14. Reibbaugruppe, insbesondere Kupplung oder Bremse, mit zumindest einem Trockenreibbauteil, **dadurch gekennzeichnet, dass** der zumindest eine Trockenreibbauteil nach Anspruch 12 oder 13 gebildet ist.

15. Verwendung des Trockenlaufreibbelages nach einem der Ansprüche 1 bis 11 in einer trocken laufenden Kupplung oder einer trocken laufenden Bremse oder einem trocken laufenden Synchronisationsgetriebe.

## Claims

1. A sintered dry-running friction lining containing no binding agent, with a friction lining body comprising a metallic matrix, at least one abrasive material and at least one filler, wherein the at least one abrasive material is selected from a group comprising mullite, silicon dioxide, corundum, glass, aluminum oxide and mixtures thereof and wherein the friction lining body has a porosity which is greater than 10 %, **characterized in that** the proportion of the at least one abrasive material in the friction lining body is at most 5 % by weight and that the at least one filler is selected from a group comprising mica, feldspar, diatomaceous earth or mixtures thereof.

2. The dry-running friction lining according to claim 1, **characterized in that** the porosity of the friction lining body is selected from a range with a lower limit of 15 % and an upper limit of 40 %.

3. The dry-running friction lining according to claim 1 or 2, **characterized in that** the proportion of metallic matrix in the friction lining body is selected from a range with a lower limit of 60 % by weight and an upper limit of 90 % by weight.

4. The dry-running friction lining according to one of the preceding claims, **characterized in that** the metallic matrix is formed by at least one metal or a metal alloy which has a Vickers hardness selected from a range with a lower limit of 30 HV10 and an upper limit of 80 HV10.

5. The dry-running friction lining according to one of the preceding claims, **characterized in that** the metallic matrix is formed from at least one element selected from a group comprising copper, iron, tin, zinc, or alloys and mixtures thereof.

6. The dry-running friction lining according to one of the preceding claims, **characterized in that** the proportion of the at least one filler in the friction lining is selected from a range with a lower limit of 5 % by weight and an upper limit of 35 % by weight.

7. The dry-running friction lining according to one of the preceding claims, **characterized in that** a ratio of filler to abrasive material is selected from a range with a lower limit of 1:1 and an upper limit of 5:1.

8. The dry-running friction lining according to one of the preceding claims, **characterized in that** the friction lining body has a first surface and a second surface lying opposite first surface and the proportion of abrasive material increases from the first surface in the direction of the second surface.

9. The dry-running friction lining according to one of the preceding claims, **characterized in that** the metallic matrix contains at least one solid lubricant selected from a group comprising graphite, molybdenum disulfide, coke and mixtures thereof.

10. The dry-running friction first surface according to claim 9, **characterized in that** the proportion of the at least one solid lubricant is selected from a range with a lower limit of 2 % by weight and an upper limit of 30 % by weight.

11. The dry-running friction first surface according to the preceding claims, **characterized in that** a ratio of abrasive material to solid lubricant is selected from a range with a lower limit of 1:7 and an upper limit of 1:20.

12. The dry-running friction component with a base part to which a friction lining is joined, **characterized in that** the friction lining is as specified in one of the preceding claims.

13. The dry-running friction component according to claim 12, **characterized in that** the friction covering has a first surface and a second surface lying opposite it, wherein the first surface lies against the base part and the proportion of abrasive material in the friction covering increases from the first surface in the direction of the second surface.

14. The friction unit, in particular a clutch or brake, with at least one dry-running friction component, **characterized in that** the at least one dry-running friction component is as specified in claim 12 or 13.

15. A use of the dry-running friction lining according to one of claims 1 to 11 in a dry-running clutch or a dry-running brake or a dry-running synchronization gear box.

## Revendications

1. Garniture de friction pour fonctionnement à sec, frittée, sans liant, comportant un corps de garniture de friction, qui comprend une matrice métallique, au moins une substance abrasive et au moins une matière de charge, la ou les substances abrasives étant choisies dans un groupe comprenant la mullite, le dioxyde de silicium, le corindon, le verre, l'oxyde d'aluminium, ainsi que les mélanges de ceux-ci, et le corps de garniture de friction présentant une porosité qui est supérieure à 10 %, **caractérisée en ce que** la proportion de la ou des substances abrasives, rapportée au corps de garniture de friction, est au maximum de 5 % en poids, et la ou les matières de charge sont choisies dans un groupe comprenant le mica, le feldspath, le kieselguhr, ou les mélanges de ceux-ci.

2. Garniture de friction pour fonctionnement à sec selon la revendication 1, **caractérisée en ce que** la porosité du corps de garniture de friction est choisie dans une plage ayant une limite inférieure de 15 % et une limite supérieure de 40 %.

3. Garniture de friction pour fonctionnement à sec selon la revendication 1 ou 2, **caractérisée en ce que** la proportion de la matrice métallique, rapportée au corps de garniture de friction, est choisie dans une plage ayant une limite inférieure de 60 % en poids et une limite supérieure de 90 % en poids.

4. Garniture de friction pour fonctionnement à sec selon l'une des revendications précédentes, **caractérisée en ce que** la matrice métallique est formée d'au moins un métal ou un alliage métallique, qui présente une dureté selon Vickers qui est choisie dans une plage ayant une limite inférieure de 30 HV10 et une limite supérieure de 80 HV10.

5. Garniture de friction pour fonctionnement à sec selon l'une des revendications précédentes, **caractérisée en ce que** la matrice métallique est formée d'au moins un élément du groupe comprenant le cuivre, le fer, l'étain, le zinc, ou les alliages et mélanges de ceux-ci.

6. Garniture de friction pour fonctionnement à sec selon l'une des revendications précédentes, **caractérisée en ce que** la proportion de la ou des matières de charge, rapportée à la garniture de friction, est choisie dans une plage ayant une limite inférieure 5 % en poids et une limite supérieure de 35 % en poids.

7. Garniture de friction pour fonctionnement à sec selon l'une des revendications précédentes, **caractérisée en ce qu'**un rapport de la matière de charge à la substance abrasive est choisi dans une plage ayant une limite inférieure de 1:1 et une limite supérieure de 5:1.

8. Garniture de friction pour fonctionnement à sec selon l'une des revendications précédentes, **caractérisée en ce que** le corps de garniture de friction présente une première surface et une deuxième surface opposée à celle-ci, et que la proportion de la substance abrasive augmente à partir de la première surface dans la direction de la deuxième surface.

9. Garniture de friction pour fonctionnement à sec selon l'une des revendications précédentes, **caractérisée en ce que** la matrice métallique contient au moins un lubrifiant solide, qui est choisi dans un groupe comprenant le graphite, le disulfure de molybdène, le coke et les mélanges de ceux-ci.

10. Garniture de friction pour fonctionnement à sec selon la revendication 9, **caractérisée en ce que** la proportion du ou des lubrifiants solides est choisie dans une plage ayant une limite inférieure de 2 % en poids et une limite supérieure de 30 % en poids.

11. Garniture de friction pour fonctionnement à sec selon la revendication précédente, **caractérisée en ce qu'**un rapport de la substance abrasive au lubrifiant solide est choisi dans une plage ayant une limite inférieure de 1:7 et une limite supérieure de 1:20.

12. Composant de friction sèche, ayant une partie formant support à laquelle est reliée une garniture de friction, **caractérisé en ce que** la garniture de friction est réalisée selon l'une des revendications précédentes.

13. Composant de friction sèche selon la revendication 12, **caractérisé en ce que** la garniture de friction présente une première surface et une deuxième surface opposée à celle-ci, la première surface s'appuyant contre la partie formant support, et la proportion de la substance abrasive, rapportée à la garniture de friction, augmentant à partir de la première surface et dans la direction de la deuxième surface.

14. Sous-ensemble de friction, en particulier accouplement ou frein, comportant au moins un composant de friction sèche, **caractérisé en ce que** le ou les composants de friction sèche sont formés selon la revendication 12 ou 13.

15. Utilisation de la garniture de friction pour fonctionnement à sec selon l'une des revendications 1 à 11 dans un accouplement fonctionnant à sec ou dans un frein fonctionnant à sec ou un engrenage de synchronisation fonctionnant à sec.
